# EUROPEAN PATENT APPLICATION

(11) **EP 3 255 958 A1**
(43) Date of publication of application: **13.12.2017**
(21) Application number: 15881044.0
(22) Date of filing: 02.02.2015
(51) Int. Cl.: H05B 6/12

(54) **NON-CONTACT POWER TRANSMISSION DEVICE, ELECTRIC APPARATUS, AND NON-CONTACT POWER TRANSMISSION SYSTEM**

(71) Applicant: Mitsubishi Electric Corporation, Chiyoda-ku Tokyo 100-8310 (JP); Mitsubishi Electric Home Appliance Co., Ltd., Fukaya-shi, Saitama 369-1295 (JP)
(72) Inventor: YOSHINO, Hayato, Tokyo 100-8310 (JP); ITO, Yuichiro, Tokyo 100-8310 (JP); SUGA, Ikuro, Tokyo 100-8310 (JP)
(74) Representative: Pfenning, Meinig & Partner mbB
(86) International application number: PCT/JP2015/052814
(87) International publication number: WO 2016/125227

(57) **Abstract**

A wireless power transfer apparatus according to the present invention includes a coil for generating an electromagnetic field by receiving an alternating current; a support configured to support the electrical equipment within the electromagnetic field; a receiver configured to receive the information signal from the electrical equipment; and an inverter circuit configured to transfer the power to the electrical equipment by supplying the alternating current to the coil upon reception of the information signal by the receiver.

## Description

### Technical Field

The present invention relates to a wireless power transfer apparatus configured to transfer electric power to electrical equipment, the electrical equipment configured to draw the electric power transferred from the wireless power transfer apparatus, and a wireless power transfer system provided with the wireless power transfer apparatus and the electrical equipment.

### Background Art

Conventional wireless power transfer apparatuses that have been proposed include a wireless power transfer apparatus comprising a load judgment unit adapted to judge whether a load placed on a top plate is electrical equipment, wherein when the load judgment unit judges that the load is electrical equipment, an inverter is controlled to suit the electrical equipment (see, for example, Patent Literature 1).

### Citation List

### Patent Literature

Patent Literature 1: International Publication No. WO 2013/094174

### Summary of Invention

### Technical Problem

With the wireless power transfer apparatus described in Patent Literature 1, when the load judgment unit judges that the load placed on the top plate (support) is electrical equipment, an operation of supplying electric power to the electrical equipment is performed. However, there is a problem in that if a judgment result of the load judgment unit is erroneous, electric power cannot be supplied appropriately to the electrical equipment.

The present invention has been made to solve the above problem and has an object to provide a wireless power transfer apparatus that supplies electric power appropriately to electrical equipment as well as to provide the electrical equipment and a wireless power transfer system.

### Solution to Problem

An embodiment of the present invention provides a wireless power transfer apparatus for transferring power to electrical equipment, the electrical equipment being capable of transmitting an information signal, the wireless power transfer apparatus comprising: a coil for generating an electromagnetic field by receiving an alternating current; a support configured to support the electrical equipment within the electromagnetic field; a receiver configured to receive the information signal from the electrical equipment; and an inverter circuit configured to transfer the power to the electrical equipment by supplying the alternating current to the coil upon reception of the information signal by the receiver.

An embodiment of the present invention provides a wireless power transfer apparatus for feeding power to electrical equipment and heating a heating target, the wireless power transfer apparatus comprising: a plate on which the heating target or the electrical equipment is placed; a coil placed below the plate; an inverter for supplying power to the coil; a receiver for receiving identification information transmitted from the electrical equipment; and a controller configured to switch between a power feeding operation of feeding power to the electrical equipment and a heating operation of induction-heating a heating target, by controlling the inverter based on the identification information.

An embodiment of the present invention provides electrical equipment configured to receive power from the wireless power transfer apparatus, the electrical equipment comprising: a power receiver coil for receiving power by electromagnetic induction or electromagnetic resonance; a load circuit for operating on the power received by the power receiver coil; an operating unit for performing an input operation; and a transmitter for transmitting identification information on the electrical equipment according to the input operation performed via the operating unit.

An embodiment of the present invention provides a wireless power transfer system comprising: the wireless power transfer apparatus; and the electrical equipment.

### Advantageous Effects of Invention

Since the alternating current is supplied to the coil upon reception of the information signal, the wireless power transfer apparatus according to an embodiment of the present invention can accurately judge the load placed on the plate and supply electric power appropriately to the electrical equipment.

### Brief Description of Drawings

[Fig. 1] Fig. 1 is an exploded perspective view illustrating an induction heating cooker according to Embodiment 1.
[Fig. 2] Fig. 2 is a diagram illustrating a drive circuit of a wireless power transfer apparatus according to Embodiment 1.
[Fig. 3] Fig. 3 is a block diagram illustrating a configuration of a wireless power transfer system according to Embodiment 1.
[Fig. 4] Fig. 4 is a flowchart illustrating power feeding operation of the wireless power transfer system according to Embodiment 1.
[Fig. 5] Fig. 5 is a diagram illustrating another drive circuit of the induction heating cooker according to Embodiment 1.
[Fig. 6] Fig. 6 is a diagram illustrating part of a drive circuit of an induction heating cooker according to Embodiment 2.
[Fig. 7] Figs. 7(a) and 7(b) are diagrams illustrating an example of drive signals of an inverter circuit according to Embodiment 3.
[Fig. 8] Fig. 8 is a diagram illustrating input power characteristics versus duty ratio of the inverter circuit according to Embodiment 3.
[Fig. 9] Fig. 9 is a block diagram illustrating a configuration of a wireless power transfer system according to Embodiment 4.
[Fig. 10] Fig. 10 is a block diagram illustrating a configuration of a wireless power transfer system according to Embodiment 5.

### Description of Embodiments

An embodiment in which a wireless power transfer apparatus according to the present invention is applied to an induction heating cooker 100 configured to induction-heat a heating target such as a pan/pot placed on a top plate will be described below. Note that the present invention is not limited by the embodiments.

### Embodiment 1.

### (Configuration)

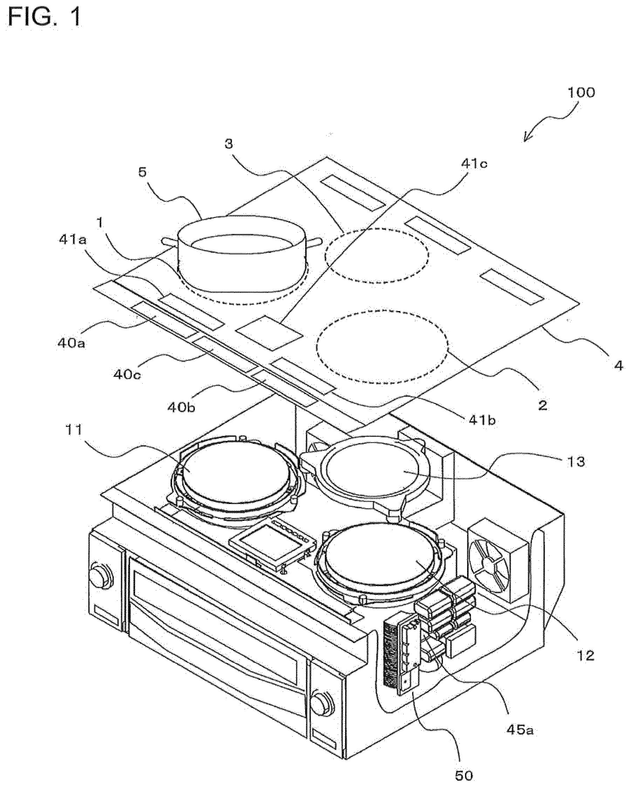

Fig. 1 is an exploded perspective view illustrating an induction heating cooker according to Embodiment 1.

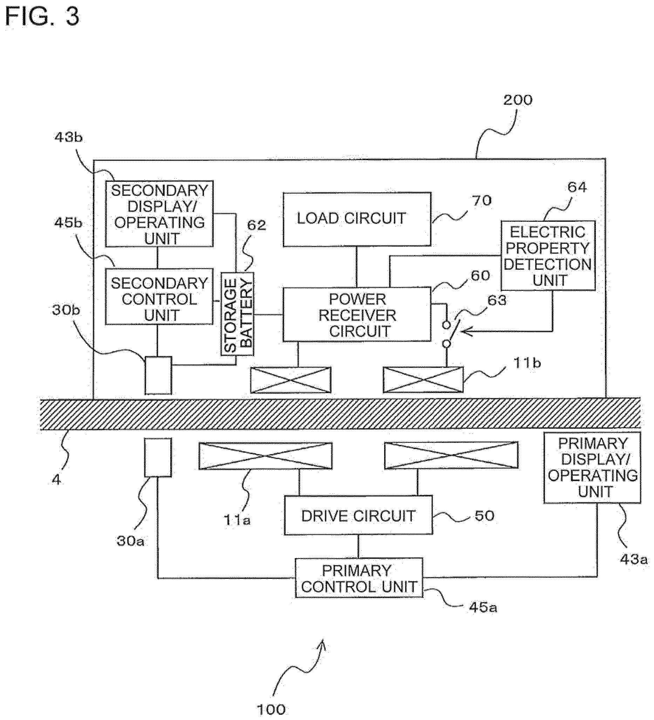

As shown in Fig. 1, a top plate 4 is provided on top of an induction heating cooker 100, which is a wireless power transfer apparatus, to place a heating target 5 such as a pan/pot or a load such as electrical equipment 200 (see Fig. 3). Fig. 1 illustrates an example in which the heating target 5 is placed as a load. A first cooking zone 1, a second cooking zone 2, and a third cooking zone 3 are provided on the top plate 4 as cooking zones for use to induction-heat the heating target 5, a first heating unit 11, a second heating unit 12, and a third heating unit 13 are provided for respective cooking zones, and a heating target 5 can be placed and induction-heated on each of the cooking zones.

According to Embodiment 1, the first heating unit 11 and second heating unit 12 are arranged on left and right on a near side of a main body and the third heating unit 13 is provided at an approximate center on a far side of the main body.

Note that the arrangement of the cooking zones is not limited to this. For example, the three cooking zones may be arranged approximately linearly in a lateral direction. Also, the first heating unit 11 and second heating unit 12 may be arranged in such a way as to differ in center position in a depth direction.

The top plate 4 is made entirely of material transmitting infrared radiation, such as heat-resistant tempered glass or crystallized glass and is fixed to an outer circumference of an opening in a top face of the main body of the induction heating cooker 100 in a watertight manner, with a rubber packing or a seal interposed therebetween. On the top plate 4, circular pan/pot position marks indicating appropriate placement locations of pans/pots are formed by application of a paint, printing, or the like in such a way as to correspond to heating ranges (cooking zones) of the first heating unit 11, the second heating unit 12, and the third heating unit 13.

On a near side of the top plate 4, an operating unit 40a, an operating unit 40b, and an operating unit 40c (hereinafter sometimes referred to collectively as the operating unit 40) are provided as input devices for use to set input heating power (input electric power) or a cooking menu (water heating mode, deep-frying mode, or the like) in heating the objects to be heated 5 on the first heating unit 11, the second heating unit 12, and the third heating unit 13. Also, a display unit 41 a, a display unit 41 b, and a display unit 41 c are provided as a notification unit 42 in a neighborhood of the operating unit 40 to display an operating state of the induction heating cooker 100 or input/operation details or the like sent from the operating unit 40.

Note that the operating units 40a to 40c and the display units 41 a to 41 c may be provided for respective cooking zones or the operating unit 40 and the display unit 41 may be provided collectively for all the cooking zones and that the present invention is not particularly limited to one of these types. Note that the operating units 40a to 40c are made up, for example, of mechanical switches such as push switches or tact switches or touch switches adapted to detect an input operation based on changes in capacitance of electrodes. Also, the display units 41 a to 41 c are made up, for example, of LCDs (Liquid Crystal Devices), LEDs, or other devices.

Note that in the following description, it is assumed that a primary display/operating unit 43a is provided, integrating the operating unit 40 and display unit 41. The primary display/operating unit 43a is made up, for example, of a touch panel constructed by placing touch switches on a top face of an LCD.

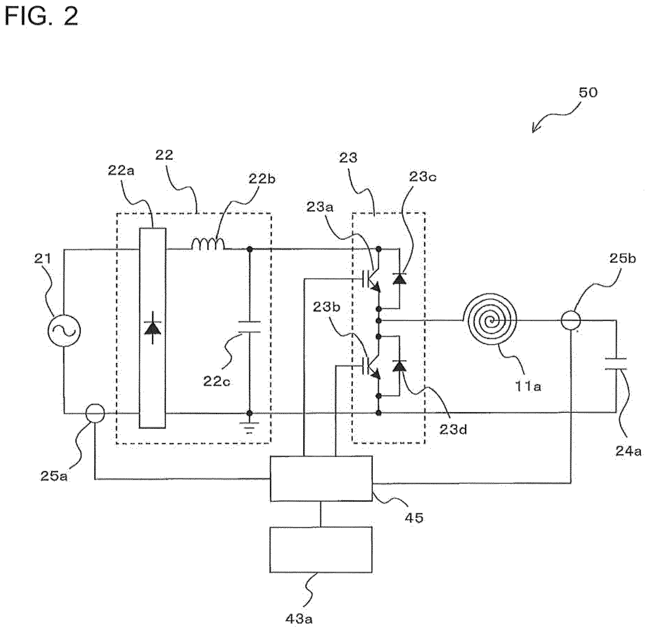

The first heating unit 11, the second heating unit 12, and the third heating unit 13 are provided below the top plate 4 and inside the main body, and each of the heating units are made up of a coil 11 a (see Fig. 2). Note that when the electrical equipment 200 is placed on the top plate 4, the heating units 11 to 13 operate as power feeding units adapted to feed electric power by electromagnetic induction or electromagnetic resonance. Details will be described later.

A drive circuit 50 adapted to supply high-frequency electric power to the coils 11 a of the first heating unit 11, the second heating unit 12, and the third heating unit 13 as well as a primary control unit 45a adapted to control operation of the entire induction heating cooker including the drive circuit 50 are provided inside a main body of the induction heating cooker 100.

The coil 11 a is substantially circular in planar shape and is constructed by winding a conducting wire made of any metal (e.g., copper or aluminum) coated with insulation in a circumferential direction. When high-frequency electric power is supplied to the coil 11 a from the drive circuit 50, a high-frequency magnetic field is generated in the coil 11 a.

Fig. 2 is a diagram illustrating the drive circuit of the wireless power transfer apparatus according to Embodiment 1.

Note that the drive circuit 50 is provided for each heating unit and that a circuit configuration may be the same among the heating units or varied among the heating units. Only one drive circuit 50 is illustrated in Fig. 2. As shown in Fig. 2, the drive circuit 50 includes a DC power supply circuit 22, an inverter circuit 23, and a resonant capacitor 24a.

An input current detection unit 25a is made up, for example, of a current sensor and is adapted to detect an electric current input to the DC power supply circuit 22 from an AC power supply (commercial power supply) 21 and output a voltage signal corresponding to an input current value to the primary control unit 45a.

The DC power supply circuit 22 includes a diode bridge 22a, a reactor 22b, and a smoothing capacitor 22c, converts an AC voltage input from the AC power supply 21 into a DC voltage, and outputs the DC voltage to the inverter circuit 23.

The inverter circuit 23 is an inverter of a so-called half bridge type, in which IGBTs 23a and 23b as switching devices are series-connected to an output of the DC power supply circuit 22 and diodes 23c and 23d as flywheel diodes are connected to the IGBTs 23a and 23b in parallel, respectively. The IGBT 23a and IGBT 23b are driven by being turned on and off based on drive signals output from the primary control unit 45a. The primary control unit 45a outputs drive signals to turn on and off the IGBT 23a and IGBT 23b alternately: turning off the IGBT 23b while the IGBT 23a is on and turning on the IGBT 23b while the IGBT 23a is off. Consequently, the inverter circuit 23 converts DC power output from the DC power supply circuit 22 into high-frequency AC power with a frequency of around 20 kHz to 80 kHz and supplies the electric power to a resonance circuit made up of the coil 11 a and resonant capacitor 24a.

The coil 11 a and resonant capacitor 24a connected in series make up the resonance circuit, which has a resonance frequency corresponding to inductance of the coil 11 a, capacitance of the resonant capacitor 24a, and the like. Note that the inductance of the coil 11 a changes according to characteristics of metal loading when the heating target 5 (metal load) is magnetically coupled and that the resonance frequency of the resonance circuit changes with the inductance changes.

With this configuration, a high-frequency current on the order of tens of amperes flows through the coil 11 a and the heating target 5 placed on the top plate 4 right above the coil 11 a is induction-heated by a high frequency magnetic flux generated by the flowing high-frequency current. The IGBTs 23a and 23b, which are switching devices, are made, for example, of a silicon-based semiconductor, yet may be made of a wide band-gap semiconductor such as silicon carbide or gallium nitride-based material.

Employment of a wide band-gap semiconductor for the switching devices reduces transport-current losses of the switching devices. Also, the employment thereof maintains heat-resistance characteristics of the drive circuit satisfactory even if high frequency (high speed) is adopted for the switching frequency (drive frequency), therefore radiating fins of the drive circuit can be reduced in size, leading to downsizing and cost reduction of the drive circuit.

A coil current detection unit 25b is connected to the resonance circuit made up of the coil 11 a and the resonant capacitor 24a. The coil current detection unit 25b is made up, for example, of a current sensor and is adapted to detect an electric current flowing through the coil 11 a and output a voltage signal corresponding to a coil current value to the primary control unit 45a.

Fig. 3 is a block diagram illustrating a configuration of a wireless power transfer system according to Embodiment 1.

In the state shown in Fig. 3, the electrical equipment 200 is placed on the top plate 4 of the induction heating cooker 100.

As shown in Fig. 3, the wireless power transfer system is made up of the induction heating cooker 100 and electrical equipment 200, where the induction heating cooker 100 is a wireless power transfer apparatus.

The induction heating cooker 100, which is a wireless power transfer apparatus includes the coil 11 a, a primary transmitter/receiver unit 30a, the primary display/operating unit 43a, the primary control unit 45a, and the drive circuit 50, which are placed under the top plate 4.

The primary transmitter/receiver unit 30a is made up of a radio communication interface compatible with any of communication standards including, for example, wireless LAN, Bluetooth (registered trademark), and infrared data communication. The primary transmitter/receiver unit 30a conducts bi-directional telecommunication with a secondary transmitter/receiver unit 30b of the electrical equipment 200.

The primary control unit 45a is made up of a microprocessor, DSP (Digital Signal Processor), or the like. Based on operation details sent from the primary display/operating unit 43a and communication information received from the primary transmitter/receiver unit 30a, the primary control unit 45a controls the drive circuit 50. Also, the primary control unit 45a conducts a display on the primary display/operating unit 43a according to an operating state.

The electrical equipment 200 includes, for example, a mixer (blender) equipped with a motor or a grill equipped with a heater. The electrical equipment 200 is placed on the top plate 4 of the induction heating cooker 100 and configured to wirelessly receive electric power from the induction heating cooker 100.

The electrical equipment 200 includes a power receiver coil 11 b configured to receive power by electromagnetic induction, a power receiver circuit 60 configured to rectify and smooth the electric power received by the power receiver coil 11 b, and a storage battery 62 configured to accumulate the electric power smoothed by the power receiver circuit 60. According to Embodiment 1, the electrical equipment 200 also includes a load circuit 70 configured to operate on the electric power (DC power) smoothed by the power receiver circuit 60. Note that the electric power (AC power) received by the power receiver coil 11 b may be supplied to the load circuit 70 without an intervening power receiver circuit 60.

Also, the electrical equipment 200 includes the secondary transmitter/receiver unit 30b, a secondary display/operating unit 43b, and a secondary control unit 45b.

The secondary transmitter/receiver unit 30b is made up of a radio communication interface compatible with communication standards for the primary transmitter/receiver unit 30a. The secondary transmitter/receiver unit 30b bidirectionally communicates information with the primary transmitter/receiver unit 30a of the induction heating cooker 100.

The secondary control unit 45b is made up of a microprocessor, DSP (Digital Signal Processor), or the like. Based on operation details sent from the secondary display/operating unit 43b, the secondary control unit 45b transmits communication information from the secondary transmitter/receiver unit 30b. Also, based on an operating state of the electrical equipment 200, communication information received from the primary transmitter/receiver unit 30a, and the like, the secondary control unit 45b conducts a display on the secondary display/operating unit 43b.

The secondary transmitter/receiver unit 30b, the secondary display/operating unit 43b, and the secondary control unit 45b can operate on the electric power accumulated in the storage battery 62 even when the power receiver coil 11 b is not receiving electric power. Note that although in Embodiment 1, description is given of a configuration in which the electric power received by the power receiver coil 11 b is accumulated in the storage battery 62, the present invention is not limited to this. For example, a primary battery may be used instead of the storage battery 62.

Also, the electrical equipment 200 includes a switch 63 provided between the power receiver coil 11 b and power receiver circuit 60 and adapted to open and close and an electric property detection unit 64 adapted to control the switch 63.

When the switch 63 is open, supply of electric power induced in the power receiver coil 11 b is stopped.

The electric property detection unit 64 detects electric properties of the electric power (high-frequency electric power) received from the induction heating cooker 100 and controls the switch 63 according to detection results. Examples of the electric properties available for use include the electric power received by the power receiver coil 11 b, a voltage induced in the power receiver coil 11 b, an electric current flowing through the power receiver coil 11 b. The electric property detection unit 64 is made up, for example, of various sensors such as a voltage sensor and current sensor and a microprocessor adapted to control the switch 63 based on detection results produced by the sensors.

Note that the top plate 4 corresponds to a "support" according to the present invention.

Note that the primary control unit 45a corresponds to a "controller" according to the present invention. Also, the secondary display/operating unit 43b corresponds to an "operating unit" according to the present invention.

Also, the electric property detection unit 64 corresponds to a "second controller" according to the present invention.

### (Operation)

Next, heating operation and power feeding operation (power transfer operation) of the induction heating cooker 100 according to Embodiment 1 will be described.

### (Heating operation)

A user places a heating target 5 on a cooking zone and gives a command to start heating (turn on heating) via the primary display/operating unit 43a. The primary control unit 45a controls the inverter circuit 23 according to set electric power (heating power). High-frequency drive signals with a frequency of, for example, around 20 kHz to 80 kHz are input to the IGBTs 23a and 23b of the inverter circuit 23 and the IGBTs 23a and 23b are switched on and off alternately, thereby supplying a high-frequency current to the resonance circuit made up of the coil 11 a and resonant capacitor 24a. When the high-frequency current flows through the coil 11 a, a high-frequency magnetic field is generated, eddy currents flow at a bottom of the heating target 5 in such a direction as to cancel off flux variations, and the heating target 5 is heated by losses due to the flowing eddy currents.

### (Power feeding operation)

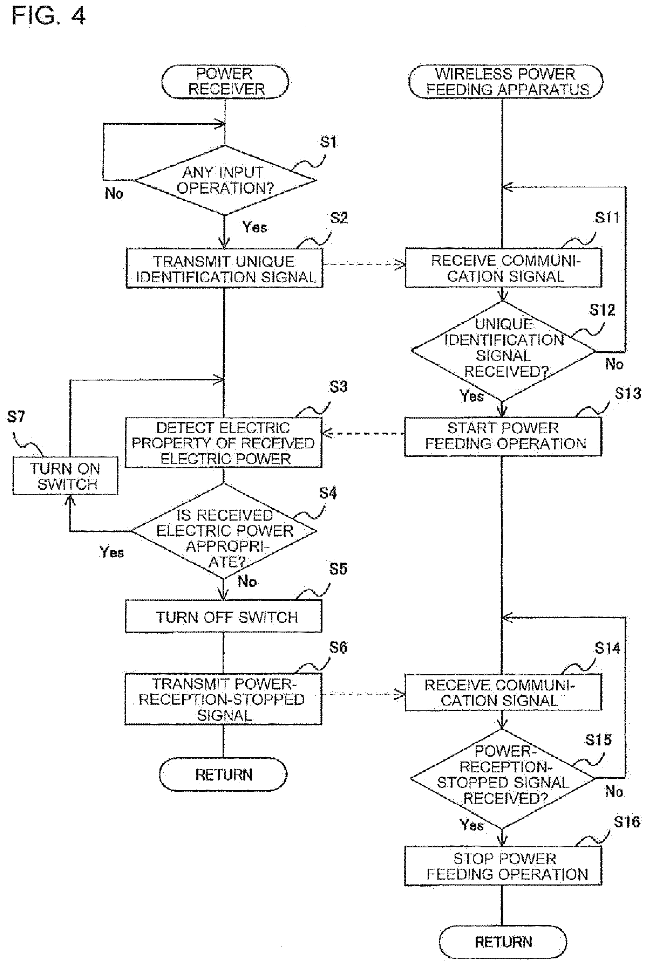

Fig. 4 is a flowchart illustrating power feeding operation of the wireless power transfer system according to Embodiment 1.

The user places the electrical equipment 200 on a cooking zone of the induction heating cooker 100. The user turns on a power switch of the induction heating cooker 100, thereby putting every component of the induction heating cooker 100 in a state of being ready to operate (stand-by state).

The secondary control unit 45b of the electrical equipment 200 checks whether or not an input operation has been performed on the secondary display/operating unit 43b (S1). The input operation can be implemented by any method such as turning on a power switch of the electrical equipment 200 or turning on a start switch used to start operation of the electrical equipment 200.

When it is determined that an input operation has been performed on the secondary display/operating unit 43b, the secondary control unit 45b transmits a unique identification signal via the secondary transmitter/receiver unit 30b (S2). The unique identification signal is a communication signal (information signal) containing any predetermined information, examples of which include information, such as a MAC (Media Access Control) address, uniquely assigned to the electrical equipment 200, information indicating an equipment type of the electrical equipment 200, and information about equipment specifications such as a rated power, a rated voltage, and a rated frequency.

The primary transmitter/receiver unit 30a of the induction heating cooker 100 receives a communication signal transmitted from the electrical equipment 200 (S11). The primary control unit 45a determines whether or not the primary transmitter/receiver unit 30a has received a unique identification signal from the electrical equipment 200 (S12). When no unique identification signal has been received, the flow returns to Step S11.

On the other hand, when a unique identification signal has been received, the primary control unit 45a starts power feeding operation for the electrical equipment 200 by controlling the drive circuit 50 according to the received unique identification signal (S13).

In the power feeding operation (power transfer operation), the primary control unit 45a controls the drive signals for the inverter circuit 23 for example, such that predetermined electric power will be input to the coil 11 a.

Note that the control over the inverter circuit 23 in the power feeding operation is not limited to predetermined electric power, and the control may be performed according to contents of the unique identification signal. For example, the primary control unit 45a may memorize the electric power to be fed as well as the voltage, frequency, and the like of the electric power in association with the unique identification signals of respective pieces of electrical equipment 200 and feed the electric power corresponding to the received unique identification signal by controlling the inverter circuit 23. Alternatively, the primary control unit 45a may store information about plural power feeding patterns in advance according to the type and equipment specifications of the electrical equipment 200 and control the inverter circuit 23 according to the received unique identification signal.

As the inverter circuit 23 operates, a high-frequency magnetic field (electromagnetic field) is generated in the coil 11 a, generating an electromotive force in the power receiver coil 11 b of the electrical equipment 200 by electromagnetic induction. Then, a high-frequency current flowing through the power receiver coil 11 b is rectified and smoothed by the power receiver circuit 60 and supplied to the load circuit 70. Also, part of the electric power output from the power receiver circuit 60 is accumulated in the storage battery 62.

The electric property detection unit 64 of the electrical equipment 200 detects an electric property of the electric power received by the power receiver coil 11 b (S3) and determines whether or not the electric property of the received electric power is appropriate (S4). When the electric property is appropriate, the switch 63 is closed to allow the electrical equipment 200 to receive the electric power (S7) and the flow returns to Step S3. Regarding the determination as to whether or not the electric property is appropriate, the electric property is determined to be appropriate, for example, when a value of the electric power received by the power receiver coil 11 b, the voltage induced in the power receiver coil 11 b, the value of the electric current flowing through the power receiver coil 11 b, or the like does not exceed a threshold.

When it is determined that the electric property is not appropriate, the electric property detection unit 64 opens the switch 63 (S5). Consequently, the power receiver coil 11 b and power receiver circuit 60 (load circuit 70) are disconnected from each other, stopping power reception.

When the switch 63 comes into operation to stop power reception, the secondary control unit 45b transmits a power-reception-stop signal via the secondary transmitter/receiver unit 30b (S6), and the flow returns to Step S1. Note that the secondary control unit 45b may receive notification about the stoppage of power reception, for example, from the secondary display/operating unit 43b.

The primary transmitter/receiver unit 30a of the induction heating cooker 100 receives the communication signal transmitted from the electrical equipment 200 (S14). The primary control unit 45a determines whether or not the primary transmitter/receiver unit 30a has received a power-reception-stop signal from the electrical equipment 200 (S15). When no power-reception-stop signal has been received, the flow returns to Step S14.

On the other hand, when a power-reception-stop signal has been received, the primary control unit 45a stops operation of the inverter circuit 23 of the drive circuit 50 and stops power feeding operation for the electrical equipment 200 (S16). Then, the flow returns to Step S11. Note that the primary control unit 45a may receive notification about the stoppage of power feeding operation, for example, from the primary display/operating unit 43a.

In this way, by operating the switch 63 of the electrical equipment 200, it is possible to prevent inappropriate power from being fed to the electrical equipment 200. Also, when the primary transmitter/receiver unit 30a of the induction heating cooker 100 receives a power-reception-stop signal, by stopping energization of the coil 11 a, the primary control unit 45a can inhibit unnecessary power distribution.

Note that steps S3 to S6 and steps S14 to S16 may be omitted. Also, the operation of stopping power feeding on the side of the induction heating cooker 100 may be omitted by omitting only steps S6 and S14 to S16.

As described above, according to Embodiment 1, since power feeding operation is performed based on the unique identification signal transmitted from the electrical equipment 200, it is possible to accurately determine the placement of the electrical equipment 200 on the top plate 4 and supply electric power appropriately to the electrical equipment 200. Also, since the unique identification signal is transmitted through an input operation on the secondary display/operating unit 43b of the electrical equipment 200, it is possible accurately determine the placement of the electrical equipment 200 on the top plate 4 and supply electric power appropriately to the electrical equipment 200. This provides a highly reliable wireless power transfer system.

Also, since the electrical equipment 200 is equipped with the storage battery 62, allowing the secondary transmitter/receiver unit 30b, the secondary display/operating unit 43b, and the secondary control unit 45b to operate on electric power from the storage battery 62, the unique identification signal can be transmitted from the electrical equipment 200 even if no electric power is fed from the induction heating cooker 100. This provides a highly reliable wireless power transfer system in which misjudgment on the placement of the electrical equipment 200 on the top plate 4 is eliminated.

### (Configuration example of another drive circuit)

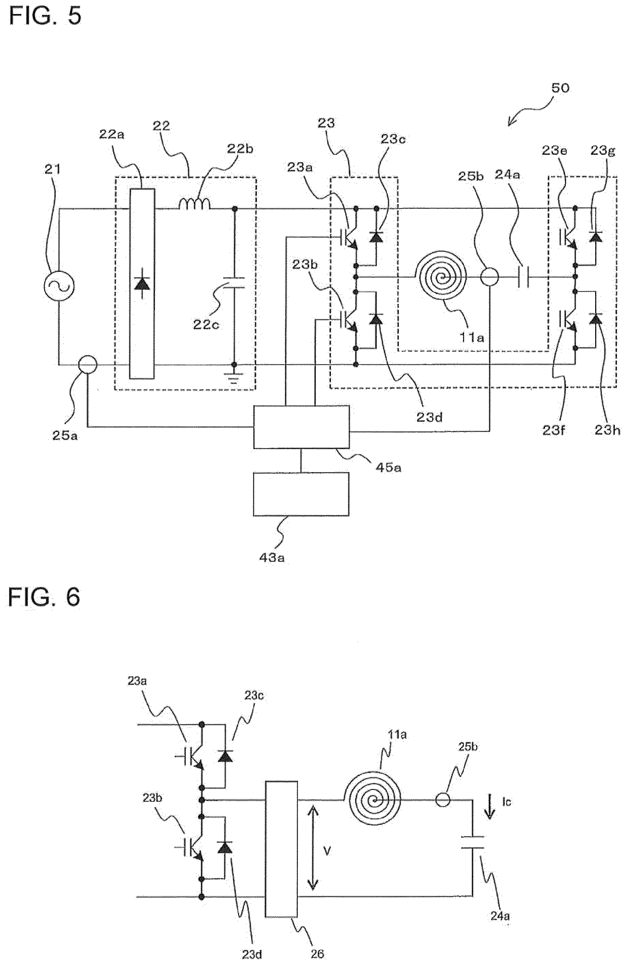

Fig. 5 is a diagram illustrating another drive circuit of the induction heating cooker according to Embodiment 1.

The drive circuit 50 shown in Fig. 5 is made up of a so-called full bridge inverter, which is configured by additionally connecting IGBTs 23e and 23f as switching devices, and diodes 23g and 23h as flywheel diodes, to the inverter circuit 23 of Fig. 2. Note that the rest of the configuration is similar to Fig. 2 and that the same components as those in Fig. 2 are denoted by the same reference numerals as the corresponding components in Fig. 2.

The primary control unit 45a outputs drive signals for driving the switching devices (IGBTs 23a, 23b, 23e, and 23f) of the inverter circuit 23 and thereby performs control such that the electric power that is input to the coil 11 a will match the electric power set for each of heating operation and power feeding operation, as with the operation described above. This configuration also provides advantageous effects similar to those described above.

### Embodiment 2.

Configuration and operation of an induction heating cooker 100 according to Embodiment 2 will be described below by focusing on differences from Embodiment 1 described above. Note that components similar to those of Embodiment 1 described above are denoted by the same reference numerals as the corresponding components.

Fig. 6 is a diagram illustrating part of a drive circuit of an induction heating cooker according to Embodiment 2.

Note that Fig. 6 illustrates configuration of only part of the drive circuit 50 shown in Fig. 2.

As shown in Fig. 6, a voltage detection unit 26 is provided on an output side of the inverter circuit 23. The voltage detection unit 26 is made up, for example, of a voltage sensor and is adapted to detect a voltage applied to a resonance circuit made up of the coil 11 a and resonant capacitor 24a and output a voltage signal corresponding to a detected voltage value to the primary control unit 45a.

The rest of the configuration is similar to Embodiment 1 described above.

Here, an example is given when electrical equipment 200 is, for example, a mixer or blender, which is equipped with a commutator motor (hereinafter referred to as a motor) as a load circuit 70. In such electrical equipment 200, if power control is performed to hold delivered power constant, the rotation speed of the motor will vary with a motor load (amount of food to be cooked in the mixer, in this case). That is, if power control is performed under a light-load condition, the motor will increase the rotation speed until reaching predetermined electric power, and may consequently exceed a maximum allowable rotation speed of the motor.

Thus, the primary control unit 45a of the induction heating cooker 100 according to Embodiment 2 controls the inverter circuit 23 in power feeding operation such that a voltage applied to the coil 11 a settles at a voltage value corresponding to the unique identification signal.

For example, the primary control unit 45a stores voltage information in advance in association with the unique identification signals of respective pieces of electrical equipment 200 and controls the inverter circuit 23 to attain a voltage corresponding to the received unique identification signal.

Such operation enables a low power operation under a low load condition, keeping the motor, as a load circuit 70, from exceeding the maximum allowable rotation speed and thus provides a highly reliable wireless power transfer system.

A highly reliable wireless power transfer system can also be obtained adopting a method in which voltage information detected by the electric property detection unit 64 is transmitted from the secondary transmitter/receiver unit 30b to the primary transmitter/receiver unit 30a and the primary control unit 45a controls the inverter circuit 23 according to the voltage information.

### Embodiment 3.

Configuration and operation of an induction heating cooker 100 according to Embodiment 3 will be described below by focusing on differences from Embodiment 1 described above. Note that components similar to those of Embodiment 1 described above are denoted by the same reference numerals as the corresponding components.

As described above, the induction heating cooker 100 generates a high frequency magnetic flux by passing a high-frequency current through the coil 11 a and feeds electric power to the electrical equipment 200 via electromagnetic induction in the power receiver coil 11 b.

Here, part of the high frequency magnetic flux (high frequency radio wave) generated in the electric coil 11 a leaks out around the induction heating cooker 100. Such a leakage flux (leakage radio wave) reaches the electrical equipment 200 or other electrical equipment, and may impact the electrical equipment 200 or other electrical equipment depending on a frequency band of the leakage flux.

To inhibit such leakage fluxes, it is conceivable to apply a noise filter to the induction heating cooker 100. However, when the inverter circuit 23 is driven at plural drive frequencies, the cost of noise filters of the induction heating cooker 100 is high, and with upsizing of the noise filters, the induction heating cooker 100 itself is upsized as well.

Thus, the primary control unit 45a of the induction heating cooker 100 according to Embodiment 3 controls delivered power in power feeding operation by varying a duty ratio of the drive signals for the inverter circuit 23 with the drive frequency of the inverter circuit 23 fixed at a predetermined frequency.

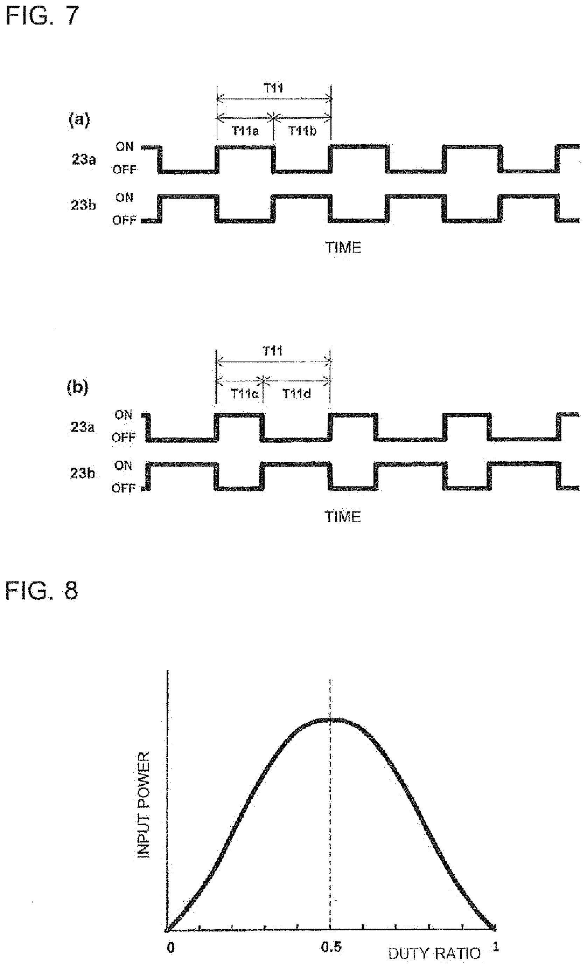

A concrete description will be given below referring to Figs. 7 and 8.

Figs. 7(a) and 7(b) are diagrams illustrating an example of drive signals of the inverter circuit according to Embodiment 3.

Fig. 7(a) is an example of drive signals for respective switches under a condition of high electric power while Fig. 7(b) is an example of drive signals for respective switches under a condition of low electric power.

The primary control unit 45a outputs drive signals of a predetermined frequency to the IGBT 23a and IGBT 23b of the inverter circuit 23. By varying the duty ratio with the frequency of the drive signals fixed, an output of the inverter circuit 23 is increased and decreased.

Fig. 8 is a diagram illustrating input power characteristics versus duty ratio of the inverter circuit according to Embodiment 3.

Fig. 8 shows input power that results when the duty ratio of the drive signals is varied with the drive frequency of the inverter circuit 23 fixed.

As shown in Fig. 8, when the drive frequency is fixed (constant), the input power (output power of the inverter circuit 23) can be increased and decreased by varying the duty ratio. In this case, the input power is controlled by varying the duty ratio generally from 0 to 0.5 or from 0.5 to 1. When the duty ratio is varied from 0 to 0.5, the input power can be increased by increasing the duty ratio.

Of the drive signals shown in Figs. 7(a) and 7(b), Fig. 7(a) illustrates an example in which an ON time T11a of the IGBT 23a (OFF time of the IGBT 23b) is equal in proportion to an OFF time T11 b of the IGBT 23a (ON time of the IGBT 23b) in one period of the drive signals, i.e., the duty ratio is 0.5.

Also, Fig. 7(b) illustrates an example in which an OFF time T11 d of the IGBT 23a (ON time of the IGBT 23b) is longer than an ON time T11 c of the IGBT 23a (OFF time of the IGBT 23b) in one period of the drive signals (the duty ratio is 0.4).

Here, a duration T11 of one period of the drive signals is the same between Figs. 7(a) and 7(b), i.e., the drive frequency of the drive signals is the same. Thus, it can be seen that the input power is higher in Fig. 7(a) than that in Fig. 7(b).

The above operation, which varies the duty ratio of the drive signals for the inverter circuit 23 with the drive frequency of the inverter circuit 23 fixed at a predetermined frequency, can control the electric power fed to the electrical equipment 200. Also, the drive frequency of the inverter circuit 23 is fixed at a predetermined frequency, thereby the noise filters used to inhibit leakage fluxes are reduced in cost and size. Further, the impact of leakage fluxes on the electrical equipment 200 or other electrical equipment can be inhibited.

Note that whereas the drive frequency is fixed at a predetermined frequency in the above description, the present invention is not limited to this, and frequency control in a predetermined range and the duty control described above may be used in combination. With such a configuration, the noise filters used to inhibit leakage fluxes can also be reduced in cost and size compared to when the inverter circuit 23 is driven by a wide range of drive frequencies.

Regarding the configuration of the inverter circuit 23, the full bridge inverter shown in Fig. 5 has a wider controllable power range when driven with the frequency fixed than the half bridge inverter shown in Fig. 2 and ensures the control in a range from low power to high power with the frequency fixed.

### Embodiment 4.

Configuration and operation of a wireless power transfer system according to Embodiment 4 will be described below by focusing on differences from Embodiment 1 described above. Note that components similar to those of Embodiment 1 described above are denoted by the same reference numerals as the corresponding components.

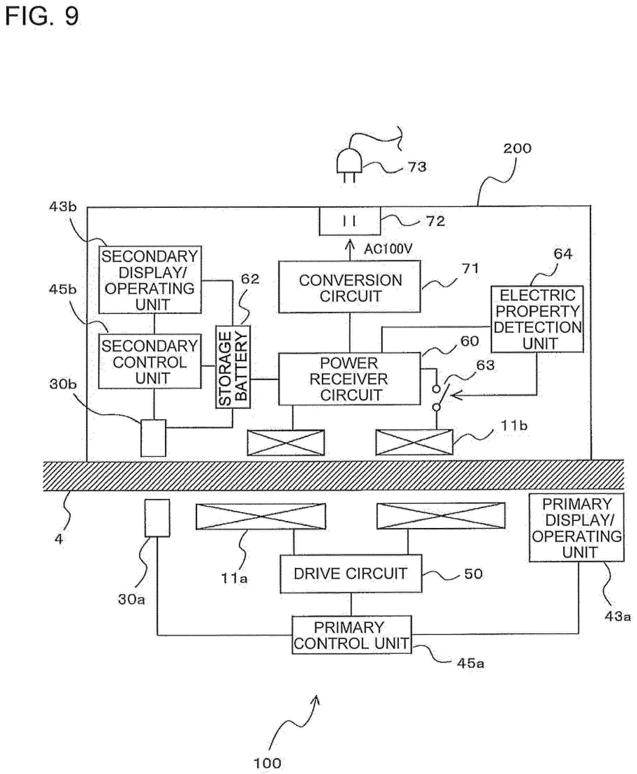

Fig. 9 is a block diagram illustrating a configuration of the wireless power transfer system according to Embodiment 4.

In the state shown in Fig. 9, the electrical equipment 200 is placed on the top plate 4 of the induction heating cooker 100.

As shown in Fig. 9, the electrical equipment 200 according to Embodiment 4 includes a conversion circuit 71 and a receptacle (outlet) 72.

The conversion circuit 71 converts the electric power rectified and smoothed by the power receiver circuit 60 into an AC voltage of a predetermined frequency, for example, into a 100-V, 50-Hz AC voltage.

The receptacle 72 is connected with a plug 73 of external equipment to supply an output voltage of the conversion circuit 71 to the external equipment.

Note that the rest of the configuration and power feeding operation are similar to any of Embodiments 1 to 3 described above.

This configuration, allows electric power to be supplied from the electrical equipment 200 to other electrical equipment. For example, by functioning as a power supply, the electrical equipment 200 can supply electric power to electrical equipment, such as a mixer, not equipped with the power receiver coil 11 b. This improves user convenience.

Note that although in Embodiments 1 to 4 above, the induction heating cooker 100 has been described as an example of the wireless power transfer apparatus according to the present invention, the present invention is not limited to this. The present invention is applicable to any equipment that adopts an induction heating method, such as a rice cooker that conducts induction-heat cooking.

### Embodiment 5.

In Embodiments 1 to 4 above, description has been given of a wireless power transfer apparatus that transfers electric power to electrical equipment and heats a heating target. In Embodiment 5, description will be given of a wireless power transfer apparatus that only transfers electric power to electrical equipment by omitting heating of a heating target.

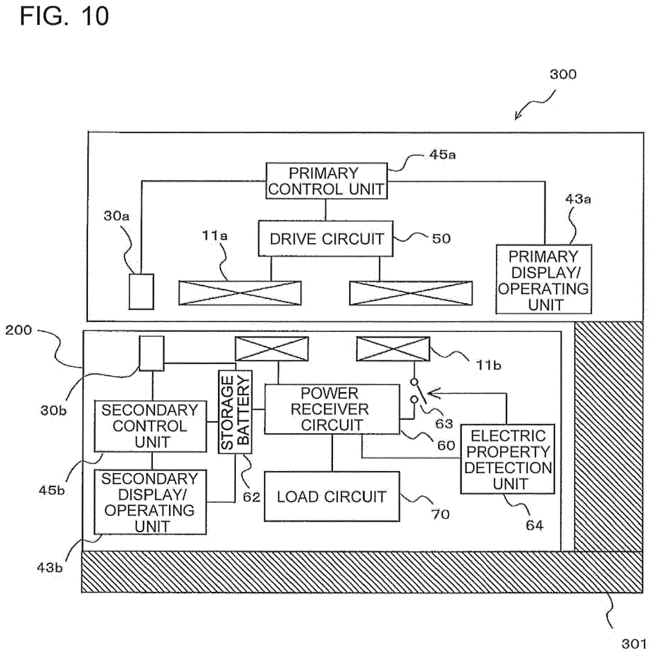

Fig. 10 is a block diagram illustrating a configuration of a wireless power transfer system according to Embodiment 5.

As shown in Fig. 10, the wireless power transfer system according to Embodiment 5 includes a wireless power transfer apparatus 300 and the electrical equipment 200.

The wireless power transfer apparatus 300 includes a support 301 configured to support the electrical equipment 200 within a high-frequency magnetic field (electromagnetic field) generated by the coil 11 a.

The configuration of the electrical equipment 200 is similar to any of Embodiments 1 to 4 described above.

Also, the coil 11 a, the primary transmitter/receiver unit 30a, the primary display/operating unit 43a, the primary control unit 45a, and the drive circuit 50 of the wireless power transfer apparatus 300 are similar in configuration to any of Embodiments 1 to 4 described above. The wireless power transfer apparatus 300 according to Embodiment 5 performs the power feeding operation described above.

In this way, the support 301 of the wireless power transfer apparatus 300 may be configured to support the electrical equipment 200 below the wireless power transfer apparatus 300. Note that the present invention is not limited to this, and the electrical equipment 200 may be supported at any positon relative to the wireless power transfer apparatus 300.

Also, the wireless power transfer apparatus 300 may be configured not to perform heating operation. Such a configuration also allows electric power to be supplied appropriately to the electrical equipment 200. Also, since the unique identification signal is transmitted through an input operation on the secondary display/operating unit 43b of the electrical equipment 200, it is possible to determine accurately how the electrical equipment 200 is supported on the support 301 and supply electric power appropriately to the electrical equipment 200. This provides a highly reliable wireless power transfer system.

### Reference Signs List

1 first cooking zone 2 second cooking zone 3 third cooking zone 4 top plate 5 heating target 11 first heating unit 11a electric coil 11 b power receiver coil 12 second heating unit 13 third heating unit 21 AC power supply 22 DC power supply circuit 22a diode bridge 22b reactor
22c smoothing capacitor 23 inverter circuit 23a IGBT 23b IGBT
23c diode 23d diode 23e IGBT 23f IGBT 23g diode 23h diode
24a resonant capacitor 25a input current detection unit 25b coil current detection unit 26 voltage detection unit 30a primary transmitter/receiver unit 30b secondary transmitter/receiver unit 40a operating unit 40b operating unit 40c operating unit 41 a display unit 41 b display unit 41 c display unit 42 notification unit 43a primary display/operating unit 43b secondary display/operating unit 45a primary control unit 45b secondary control unit 50 drive circuit 60 power receiver circuit 62 storage battery 63 switch 64 electric property detection unit 70 load circuit 71 conversion circuit 72 receptacle 73 plug 100 induction heating cooker 200 electrical equipment 300 wireless power transfer apparatus 301 support

## Claims

1. A wireless power transfer apparatus for transferring power to electrical equipment, the electrical equipment being capable of transmitting an information signal, the wireless power transfer apparatus comprising:
a coil configured to generate an electromagnetic field by receiving an alternating current;
a support configured to support the electrical equipment within the electromagnetic field;
a receiver configured to receive the information signal from the electrical equipment; and
an inverter circuit configured to transfer the power to the electrical equipment by supplying the alternating current to the coil upon reception of the information signal by the receiver.

2. A wireless power transfer apparatus for transferring power to electrical equipment and heating a heating target, the wireless power transfer apparatus comprising:
a support on which the heating target or the electrical equipment is placed;
a coil placed below the support;
an inverter configured to supply power to the coil;
a receiver configured to receive the identification signal transmitted from the electrical equipment; and
a controller configured to switch between a power transfer operation of transferring power to the electrical equipment and a heating operation of induction-heating the heating target, by controlling the inverter based on the identification information.

3. The wireless power transfer apparatus of claim 2, wherein in the power transfer operation, the controller is configured to control the inverter such that the power supplied to the coil settles at a value corresponding to the identification information.

4. The wireless power transfer apparatus of claim 2, wherein in the power transfer operation, the controller is configured to control the inverter such that a voltage applied to the coil settles at a value corresponding to the identification information.

5. The wireless power transfer apparatus of any one of claims 2 to 4, wherein in the power transfer operation, the controller is configured to vary a duty ratio of a drive signal for the inverter with a drive frequency of the inverter fixed at a predetermined frequency.

6. The wireless power transfer apparatus of any one of claims 2 to 4, wherein in the power transfer operation, the controller is configured to vary a duty ratio of a drive signal for the inverter with a drive frequency of the inverter set at a frequency in a predetermined range.

7. The wireless power transfer apparatus of any one of claims 2 to 6, wherein:
the receiver is configured to receive a power-reception-stop signal transmitted from the electrical equipment; and
the controller is configured to stop the power transfer operation when the power-reception-stop signal from the electrical equipment is received.

8. Electrical equipment configured to receive power from the wireless power transfer apparatus of any one of claims 2 to 7, the electrical equipment comprising:
a power receiver coil configured to receive power by electromagnetic induction or electromagnetic resonance;
a load circuit configured to operate on the power received by the power receiver coil;
an operating unit with which an input operation is performed; and
a transmitter configured to transmit identification information on the electrical equipment according to the input operation performed via the operating unit.

9. The electrical equipment of claim 8, further comprising:
a switch provided between the power receiver coil and the load circuit, and configured to open and close; and
a second controller configured to control the switch, wherein
the second controller is configured to open the switch when the power received by the power receiver coil, a value of a voltage induced in the power receiver coil, or a value of a current flowing through the power receiver coil exceeds a threshold.

10. The electrical equipment of claim 8 or 9, wherein the transmitter is configured to transmit a power-reception-stop signal when the power received by the power receiver coil, a value of a voltage induced in the power receiver coil, or a value of a current flowing through the power receiver coil exceeds a threshold.

11. The electrical equipment of any one of claims 8 to 10, further comprising:
a conversion circuit configured to convert the voltage induced in the power receiver coil into a predetermined frequency and voltage; and
an output terminal configured to output power resulting from the conversion performed by the conversion circuit.

12. A wireless power transfer system comprising:
the wireless power transfer apparatus of any one of claims 1 to 7; and
the electrical equipment of any one of claims 8 to 11.

13. A wireless power transfer system comprising:
the wireless power transfer apparatus of any one of claims 2 to 7; and
the electrical equipment of any one of claims 8 to 11,
wherein the transmitter is configured to transmit the power received by the power receiver coil, a voltage induced in the power receiver coil, or a value of a current flowing through the power receiver coil, as communication information, and
the controller is configured to control the inverter such that the communication information takes a predetermined value.
